# FASCICULE DE BREVET EUROPEEN

(11) **EP 1 327 555 B1**
(45) Date de publication et mention de la délivrance du brevet: **19.10.2011**
(21) Numéro de dépôt: 02293028.3
(22) Date de dépôt: 06.12.2002
(51) Int. Cl.: B60L 5/28

(54) **Dispositif de sélection pour la mise en relation d'un dispositif de régulation et d'une pluralite de pantographes**
Selektionsvorrichtung zum Verbinden einer Regulationsvorrichtung mit mehreren Stromabnehmern
Selection apparatus for connecting a regulating device to a set of pantographs

(30) Priorité: 12.12.2001 FR 0116056
(43) Date de publication de la demande: 16.07.2003
(73) Titulaire: FAIVELEY TRANSPORT, 93200 Saint Denis (FR)
(72) Inventeur: Blanvillain, Gérard, 37270 Veretz (FR); Benoit, Christophe, 37100 Tours (FR)
(74) Mandataire: Novagraaf Technologies

(56) Documents cités:
- FR-A- 2 680 143
- FR-A- 2 809 683
- JP-A- 07 007 805

## Description

L'invention concerne les systèmes de captage de courant pour véhicules ferroviaires et en particulier les dispositifs de sélection destinés à la gestion de tels systèmes complexes comprenant plusieurs pantographes dont la force exercée contre la ligne caténaire est régulée.

Un pantographe, par exemple celui décrit dans le brevet FR 2 680 143, comporte une structure déployable fixée sur le toit d'une rame ferroviaire. Un actionneur pneumatique agit à la base de cette structure pour appliquer un collecteur de courant, situé au sommet de la structure, contre la ligne caténaire. Un dispositif de régulation commande la pression de l'actionneur pneumatique en fonction d'un ou plusieurs paramètres de fonctionnement de la rame tels que la vitesse ou le type de ligne caténaire.

Ces dispositifs connus pour alimenter électriquement une rame ferroviaire depuis une ligne caténaire sont des ensembles constitués chacun d'un pantographe et de son dispositif de régulation de pression.

Ces dispositifs prévoient des moyens de détection d'anomalies conduisant, en cas d'avarie du circuit pneumatique, à la purge du circuit et à l'abaissement du pantographe ayant pour conséquences l'immobilisation du train.

Il a été conçu d'autre part des dispositifs de régulation de pression intégrant des dispositifs de secours prenant le relais en cas d'avarie dans le circuit pneumatique ou le circuit de commande, ce qui permet au train de continuer sa route, ne serait-ce qu'en mode dégradé.

Un véhicule ferroviaire doté d'un système de captage de courant perfectionné peut donc être équipé de plusieurs pantographes (destinés à des types de ligne caténaire différents ou destinés au captage en unités multiples avec plusieurs rames accouplées) et d'un dispositif de régulation pouvant fonctionner selon plusieurs modes.

Il en résulte une multitude de combinaisons dans la mise en relation d'une part d'une source de puissance (pneumatique, électrique ou autre) avec d'autre part l'actionneur de l'un des pantographes.

L'art antérieur ne fournit pas d'exemple de dispositifs conçus spécialement pour permettre au conducteur du véhicule de multiples associations entre les différentes unités d'un dispositif de régulation et les différents pantographes.

Dans les véhicules connus, un dispositif de régulation est associé à chacun des pantographes, ce qui est coûteux, ou bien il n'est pas possible de réguler la force exercée par différents pantographes avec les différents modes de fonctionnement du dispositif de régulation.

Le but de l'invention est de pallier ces inconvénients de l'art antérieur en fournissant une solution pour réguler la force exercée par un pantographe parmi une pluralité de pantographes à l'aide d'un seul dispositif de régulation pouvant par ailleurs fonctionner selon plusieurs modes.

A cet effet, un premier objet de l'invention vise un dispositif de sélection pour les véhicules ferroviaires qui sont munis :
- d'une pluralité de pantographes, chaque pantographe étant associé à un actionneur apte à exercer une force susceptible d'appliquer un collecteur de courant prévu sur le pantographe contre une ligne caténaire ; et
- d'un dispositif de régulation de la force exercée par un actionneur, ce dispositif étant apte à fonctionner selon une pluralité de modes de régulation ;
- d'une source de puissance ;
   ledit dispositif de sélection comprenant :
- des premiers moyens de sélection de l'actionneur dont la force doit être régulée ;
- des seconds moyens de sélection du mode de régulation à mettre en oeuvre au niveau du dispositif de régulation ;
- des moyens de mise en relation de la source de puissance avec l'actionneur sélectionné par les premiers moyens de sélection selon le mode de régulation sélectionné par les seconds moyens de sélection.

Un tel dispositif de sélection permet d'associer un seul dispositif de régulation, bien que fonctionnant selon une pluralité de modes, avec l'un des pantographes d'une pluralité de pantographes disponibles sur le véhicule.

Les premiers moyens de sélection sont destinés à recueillir et à fournir aux moyens de mise en relation un signal représentatif du pantographe à utiliser. Il peut s'agir d'un commutateur manuel disposé dans la cabine du conducteur, dans le cas où celui-ci doit choisir lui-même le pantographe adapté à la ligne caténaire en présence, ou bien il peut s'agir d'un étage de commutation piloté et géré par un automatisme du train.

De manière similaire, les seconds moyens de sélection sont destinés à recueillir et à fournir aux moyens de mise en relation un signal représentatif du mode de régulation selon lequel doit être régulé la pression de l'actionneur du pantographe. Il peut s'agir d'un commutateur donnant le choix au conducteur entre, par exemple, un mode de régulation principal et un mode de régulation secondaire ; il peut s'agir également de tout dispositif automatique ou semi-automatique de choix du mode de régulation.

Les moyens de mise en relation peuvent comprendre un ensemble d'actionneurs positionnés sur le circuit de puissance entre la source de puissance et l'actionneur du pantographe, cet ensemble d'actionneurs étant pilotés en vue de mettre en oeuvre les choix effectués au niveau des premiers et seconds moyens de sélection.

Dans un mode de réalisation, les premiers moyens de sélection comprennent une commande de sélection de l'ensemble pantographe-actionneur à utiliser.

Dans un autre mode de réalisation, les seconds moyens de sélection comprennent des moyens de détection des anomalies du dispositif de régulation, des moyens de notification de ces anomalies ainsi que des moyens de sélection du mode de régulation à employer.

Egalement selon un mode de réalisation particulier, les moyens de mise en relation avec la source de puissance comprennent :
- des organes de distribution sélective de l'alimentation en puissance au dispositif de régulation de façon à ce que celui-ci fonctionne selon le mode de régulation sélectionné par les seconds moyens de sélection ;
- des organes de distribution sélective de la source de puissance régulée en sortie du dispositif de régulation à l'actionneur sélectionné par les premiers moyens de sélection.

Selon un deuxième objet, l'invention vise un système de captage de courant pour véhicule ferroviaire, comprenant :
- une pluralité de pantographes, chaque pantographe étant associé à un actionneur apte à exercer une force susceptible d'appliquer un collecteur de courant prévu sur le pantographe contre une ligne caténaire ;
- un dispositif de régulation apte à fonctionner selon une pluralité de modes de régulation ;
et comprenant en outre un dispositif de sélection selon l'invention.

En particulier, le dispositif de régulation peut comprendre :
- une unité de régulation principale apte à réguler la force exercée par l'actionneur en fonction d'au moins un paramètre de fonctionnement du véhicule ;
- une unité de régulation secondaire apte à maintenir dans l'actionneur une ou plusieurs pressions prédéterminées ;
   et les seconds moyens de sélection peuvent comprendre :
- des moyens de détection des anomalies de l'unité de régulation principale et/ou de l'unité de régulation secondaire ;
- des moyens de notification de ces anomalies au conducteur du véhicule ;
- des moyens de commande accessibles au conducteur ou à l'automatisme du véhicule et aptes à mettre en oeuvre sélectivement l'unité de régulation principale ou l'unité de régulation secondaire.

Dans un mode de réalisation, le système de captage de courant peut présenter les caractéristiques suivantes :
- La source de puissance comprend une source d'air comprimé ;
- les actionneurs associés aux pantographes sont des actionneurs pneumatiques ;
- les moyens de mise en relation comprennent :
   - des électrovannes associées à chacune des unités du dispositif de régulation et agencées pour mettre en relation sélectivement l'une ou l'autre de ces unités avec la source d'air comprimé ;
   - des électrovannes associées à chacun des actionneurs pneumatiques et agencées pour mettre en relation sélectivement l'un de ces actionneurs avec la sortie du dispositif de régulation.

D'autre part, l'unité de régulation principale peut comprendre une entrée recevant des signaux représentatifs d'au moins un paramètre de fonctionnement du véhicule, des moyens numériques de traitement de l'information aptes à calculer la pression à appliquer à l'actionneur pneumatique sélectionné par les premiers moyens de sélection.

Ces moyens numériques de traitement de l'information peuvent également comprendre des ports série d'entrée/sortie informatique, par exemple des lignes série RS 232 ou RS 485, aptes à être connectés aux équipements informatiques du véhicule, et peuvent comprendre en outre un module informatique de monitoring apte à transmettre aux dits équipements informatiques du véhicule des informations sur le fonctionnement du système de captage de courant.

Selon un troisième objet, l'invention vise un véhicule ferroviaire équipé d'un système de captage de courant selon l'invention.

D'autres particularités et avantages de l'invention apparaîtront encore dans la description ci-après relative aux dessins annexés, donnés à titre d'exemple non limitatif :
- la figure 1 est une vue en perspective d'un pantographe dont la pression sur la ligne caténaire peut être commandée par un système de régulation qui lui est associé par un dispositif de sélection selon l'invention ;
- la figure 2 est un schéma fonctionnel d'un système de captage de courant selon l'invention;
- la figure 3 est un schéma fonctionnel représentant le système de régulation de la figure 2 ainsi que le dispositif de sélection selon l'invention.

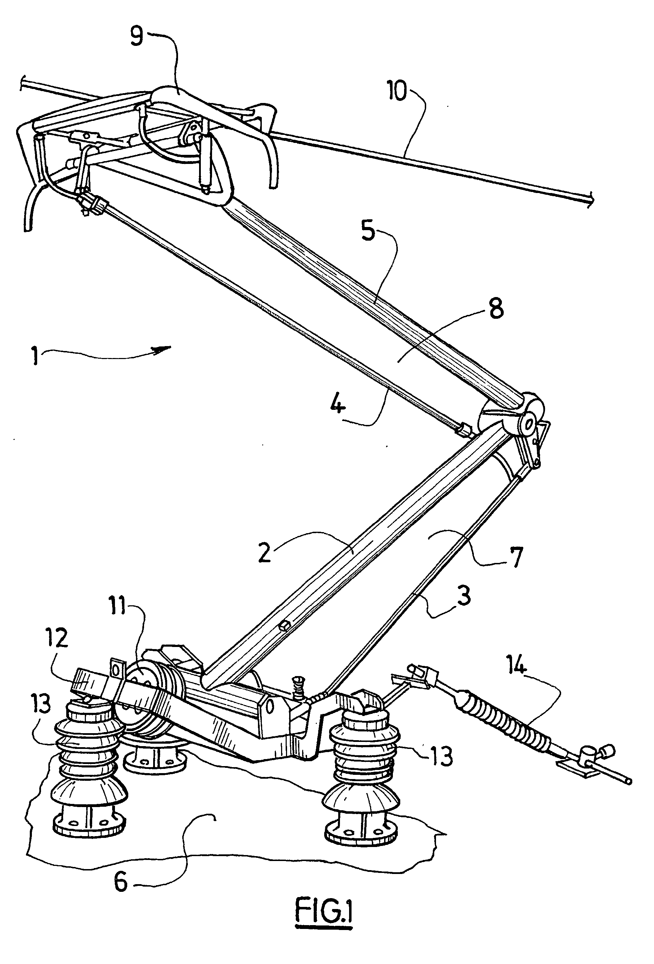

La figure 1 représente un pantographe 1 tel que rencontré typiquement dans le domaine des transports ferroviaires.

Celui-ci est destiné à être fixé sur le toit 6 du véhicule à alimenter et se compose de deux paires de barres 2, 3 ; 4, 5 articulées entre elles et formant deux parallélogrammes déformables 7, 8 coopérant entre eux de manière à former une structure déployable mobile entre une position repliée où les deux paires de barres se superposent horizontalement et entre une position déployée où le sommet du pantographe 1 est élevé à une hauteur déterminée, tout en restant horizontal.

Sur le sommet du pantographe 1 est prévu un collecteur de courant 9 qui peut être rabattu contre le toit 6 du véhicule ou être appliqué contre une ligne caténaire 10 avec une certaine pression, le collecteur 9 étant maintenu dans une position horizontale quelle que soit sa hauteur grâce au système de parallélogrammes déformables 7, 8.

Le collecteur 9 est relié au circuit électrique d'alimentation haute tension du véhicule pour pouvoir acheminer le courant lorsqu'il est en position contre la ligne caténaire 10.

Un bâti 12 supporte la structure déployable 7, 8 et assure sa fixation au toit du véhicule 6 par l'intermédiaire de moyens de fixation isolants 13. Le bâti 12 supporte également un actionneur pneumatique 11 agissant sur l'une des barres 3 du parallélogramme déformable inférieur 7 de manière à faire pivoter ladite barre 3 et ainsi commander le déploiement du pantographe.

L'actionneur 11 est alimenté en air comprimé par l'intermédiaire d'un tube isolant électriquement 14 de sorte à être mis en pression pour déployer dans un premier temps le pantographe 1 jusqu'à toucher la ligne caténaire 10 puis pour maintenir l'actionneur 11 en pression afin de maintenir le collecteur de courant 9 contre la ligne caténaire 10 avec une certaine force.

La pression de maintien dans l'actionneur pneumatique 11 est de l'ordre de quelques bars, assurant une force de contact du collecteur 9 contre la ligne 10 satisfaisante.

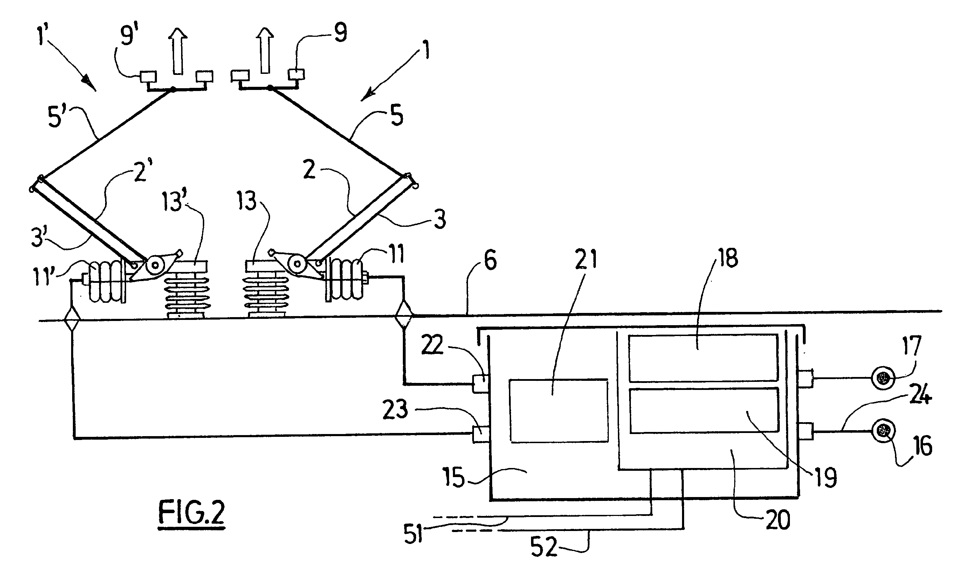

La figure 2 représente deux pantographes 1, 1' tels que décrits précédemment montés sur le toit 6 d'une rame ferroviaire.

Les pantographes sont ainsi montés généralement par paires opposées, chacun étant prévu pour fonctionner avec une ligne caténaire délivrant une tension spécifique.

Dans notre exemple, l'un des pantographes est adapté à une ligne de 25 000 Volts et l'autre est adapté à une ligne de 1500 Volts.

Le conducteur prend lui-même la décision d'utiliser le pantographe adapté à la ligne caténaire en présence. La sélection du pantographe (donc de l'actionneur dont la pression interne doit être régulée) se fait par la ligne 51, celle-ci étant reliée à un commutateur de sélection de pantographe faisant partie de l'équipement du train et disposé dans la cabine du conducteur.

La ligne 51 peut également être connectée à un automatisme du train en cas de sélection automatique du pantographe.

La figure 2 fait apparaître le branchement des deux actionneurs pneumatiques 11, 11' à un dispositif de régulation de pression 18, 19 par l'intermédiaire d'un dispositif de sélection selon l'invention.

Ce dispositif est alimenté de l'extérieur par une source d'air comprimé 16 et par une alimentation électrique couplée à une ligne série de transfert de données informatiques 17.

Il comprend une carte électronique à microprocesseur 20 portant une unité de régulation principale 18 et une unité de régulation secondaire 19, ainsi qu'un module de sélection 21 permettant la liaison de l'unité de régulation 18 ; 19 devant être utilisée en fonction des circonstances avec l'actionneur du pantographe.

De plus, une première électrovanne 22 et une seconde électrovanne 23, commandées également par le conducteur, assurent l'aiguillage de la pression régulée vers l'un ou l'autre respectivement des actionneurs pneumatiques 11, 11'.

Ainsi, la première électrovanne 22 est mise en position ouverte et la seconde électrovanne 23 est mise en position fermée pour l'utilisation du premier pantographe 1 et inversement pour l'utilisation du second pantographe 1'.

L'unité de régulation principale 18 est raccordée par l'intermédiaire d'un tuyau 24 à la source externe d'air comprimé 16.

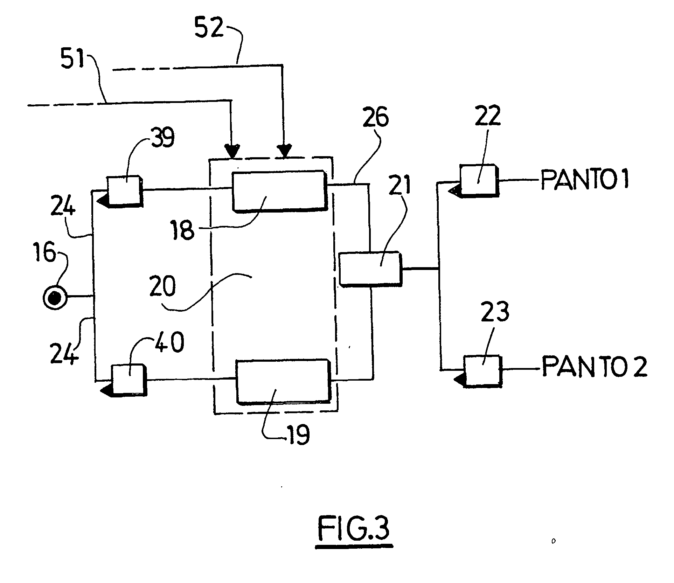

Cette unité 18 opère un traitement de la source d'air comprimé de manière à délivrer au module de sélection 21, par l'intermédiaire d'un conduit 26 (figure 3), de l'air comprimé à une pression régulée en fonction d'au moins un paramètre de fonctionnement de la rame.

Le fonctionnement de l'unité de régulation principale 18 est telle que décrite dans le brevet français FR 2 680 143 et est géré, dans la présente réalisation, par la carte électronique à microprocesseur 20 recevant en entrée les données nécessaires à régulation telles que la vitesse du train ou le type de ligne caténaire employée.

Cette carte électronique 20 assure le calcul de la pression à appliquer à l'actionneur 11 ; 11' et transmet la consigne à une servovalve (non représentée) chargée de maintenir cette pression en sortie de l'unité de régulation principale 18.

D'autre part, un dispositif interne (non représenté) de détection d'anomalies du fonctionnement de la régulation est prévu, et est apte à transmettre au conducteur un signal rendant compte d'une anomalie de la régulation.

Ladite carte électronique 20 comprend à cet effet des dispositifs d'alerte rapportant un signal de détection d'anomalies et disposés dans la cabine du conducteur.

Le dispositif interne de détection d'anomalies de la régulation principale comprend un capteur de pression au niveau de l'actionneur pneumatique 11 ; 11' du pantographe 1 ; 1', ce capteur étant raccordé à la carte électronique 20. Celle-ci effectue en permanence une comparaison entre la consigne de pression adressée à la servovalve et la pression effectivement appliquée à l'actionneur 11 ; 11', toute différence entre ces deux pressions au-delà d'un certain seuil étant interprétée comme une anomalie par la carte électronique.

Ledit dispositif de détection d'anomalies comprend également des routines de test du matériel.

Notamment, il comprend un test du microprocesseur. Celui-ci doit effectuer à intervalles réguliers une même opération simple, la défaillance de cette opération étant détectée par la carte électronique et rapportée au conducteur en tant qu'anomalie.

De même, le dispositif de détection d'anomalies intègre au sein de la carte électronique 20 une routine de test des éléments pneumatiques.

Des mesures de courant sont prévues au niveau de chacune des électrovannes du système. Elles permettent de vérifier la continuité des bobines d'électrovannes, ainsi que l'intégrité de leurs étages de commande.

D'autre part, le capteur de pression prévu au niveau de l'actionneur pneumatique est lui-même testé électriquement par un module de la carte électronique.

Egalement, un module de test des tensions de la carte électronique est intégré à celle-ci.

Le signal de détection d'anomalies, émis par la carte électronique lorsque l'un des tests décrit ci-dessus est négatif, est visualisé par le conducteur, celui-ci l'interprétant comme une demande de passage en mode secondaire.

Le conducteur décide alors, selon les circonstances, de passer effectivement en mode secondaire au lieu de la régulation principale 18 défaillante.

En effet, l'unité de régulation principale 18 fonctionne par défaut mais le conducteur a la possibilité de sélectionner un autre mode de régulation (ici, l'unité de régulation secondaire 19) par l'intermédiaire de la ligne 52 reliée à un commutateur de sélection du mode de régulation faisant partie de l'équipement du train et disposé dans la cabine du conducteur.

La ligne 52 peut également assurer sa fonction de sélection en étant connectée à un automatisme du train en vue d'une sélection de mode de régulation automatique, notamment dans le cas où serait prévu un basculement automatique en mode de régulation secondaire suite à la détection d'une anomalie.

L'unité de régulation secondaire 19 comprend une servovalve délivrant à l'actionneur pneumatique 11 ; 11' du pantographe 1 ;1' une pression régulée en fonction d'une ou plusieurs consignes fixes.

Ceci permet au pantographe 1 ; 1' de fonctionner en mode dégradé, jusqu'à la remise en état de l'unité de régulation principale 18.

L'unité de régulation secondaire 19 dispose également d'un dispositif interne de détection d'anomalies apte à informer le conducteur de l'état de fonctionnement de cette unité.

Ce dispositif de détection d'anomalies est similaire à celui prévu dans l'unité de régulation principale 18, à la différence qu'il ne fait pas intervenir de routine de test de microprocesseur, l'unité de régulation secondaire 19 ne faisant intervenir q'une régulation analogique.

La figure 3 représente des éléments fonctionnels des dispositifs de la figure 2, en faisant apparaître les liaisons entre eux.

Sur la figure 3, apparaissent également deux électrovannes 39, 40, chacune placée entre la source d'air comprimé 16 et chacun des deux modules de régulation 18, 19.

Ces électrovannes sont commandées de la manière suivante : en mode de fonctionnement normal, le module de sélection 21 met en relation l'unité de régulation principale 18 avec l'un des deux pantographes 1 ; 1', l'électrovanne 39 associée à l'unité de régulation principale 18 est ouverte et l'électrovanne 40 associée à l'unité de régulation secondaire 19 est fermée ;lors de la réception de la commande du conducteur en vue de passer en mode secondaire, le module de sélection 21 bascule afin d'utiliser l'unité de régulation secondaire 19 et les deux électrovannes 39, 40 inversent leur position respective.

## Revendications

1. Dispositif de sélection pour les véhicules ferroviaires qui sont munis :
- d'une pluralité de pantographes (1, 1'), chaque pantographe étant associé à un actionneur (11, 11') apte à exercer une force susceptible d'appliquer un collecteur de courant (9) prévu sur le pantographe contre une ligne caténaire (10) ; et
- d'un dispositif de régulation (18, 19) de la force exercée par un actionneur, ce dispositif étant apte à fonctionner selon une pluralité de modes de régulation ;
- d'une source de puissance (16) ;
ledit dispositif de sélection étant **caractérisé en ce qu'**il comprend :
- des premiers moyens (51) de sélection de l'actionneur dont la force doit être régulée ;
- des seconds moyens (52) de sélection du mode de régulation à mettre en oeuvre au niveau du dispositif de régulation (18, 19) ;
- des moyens (21, 22, 23, 39, 40) de mise en relation de la source de puissance avec l'actionneur sélectionné par les premiers moyens de sélection selon le mode de régulation sélectionné par les seconds moyens de sélection.

2. Dispositif de sélection selon la revendication 1, **caractérisé en ce que** les premiers moyens (51) de sélection comprennent une commande de sélection de l'ensemble pantographe-actionneur à utiliser.

3. Dispositif de sélection selon la revendication 1 ou 2, **caractérisé en ce que** les seconds moyens (52) de sélection comprennent des moyens de détection des anomalies du dispositif de régulation (18, 19), des moyens de notification de ces anomalies ainsi que des moyens de sélection du mode de régulation à employer.

4. Dispositif de sélection selon l'une des revendications 1 à 3, **caractérisé en ce que** les moyens de mise en relation comprennent :
- des organes (39, 40) de distribution sélective de l'alimentation en puissance (16) au dispositif de régulation (18, 19) de façon à ce que celui-ci fonctionne selon le mode de régulation sélectionné par les seconds moyens de sélection ;
- des organes (22, 23) de distribution sélective de la source de puissance régulée en sortie du dispositif de régulation (18, 19) à l'actionneur (11, 11') sélectionné par les premiers moyens de sélection.

5. Système de captage de courant pour véhicule ferroviaire, comprenant :
- une pluralité de pantographes (1, 1'), chaque pantographe étant associé à un actionneur (11, 11') apte à exercer une force susceptible d'appliquer un collecteur de courant (9) prévu sur le pantographe contre une ligne caténaire (10) ;
- un dispositif de régulation (18, 19) apte à fonctionner selon une pluralité de modes de régulation ;
**caractérisé en ce qu'**il comprend en outre un dispositif de sélection selon l'une des revendications 1 à 4.

6. Système de captage de courant selon la revendication 5, **caractérisé en ce que** le dispositif de régulation comprend :
- une unité de régulation principale (18) apte à réguler la force exercée par l'actionneur (11 ; 11') en fonction d'au moins un paramètre de fonctionnement du véhicule ;
- une unité de régulation secondaire (19) apte à maintenir dans l'actionneur (11 ; 11') une ou plusieurs pressions prédéterminées ;
et **en ce que** les seconds moyens de sélection comprennent :
- des moyens de détection des anomalies de l'unité de régulation principale et/ou de l'unité de régulation secondaire ;
- des moyens de notification de ces anomalies au conducteur du véhicule ;
- des moyens de commande accessibles au conducteur ou à l'automatisme du véhicule et aptes à mettre en oeuvre sélectivement l'unité de régulation principale (18) ou l'unité de régulation secondaire (19).

7. Système de captage de courant selon la revendication 6, **caractérisé en ce que :**
- la source de puissance comprend une source d'air comprimé (16) ;
- les actionneurs (11, 11') associés aux pantographes (1, 1') sont des actionneurs pneumatiques ;
- les moyens de mise en relation comprennent :
- des électrovannes (39, 40) associées à chacune des unités (18, 19) du dispositif de régulation et agencées pour mettre en relation sélectivement l'une ou l'autre de ces unités avec la source d'air comprimé (16) ;
- des électrovannes (22, 23) associées à chacun des actionneurs pneumatiques (11, 11') et agencées pour mettre en relation sélectivement l'un de ces actionneurs avec la sortie du dispositif de régulation.

8. Système de captage de courant selon la revendication 7, **caractérisé en ce que** l'unité de régulation principale (18) comprend une entrée recevant des signaux représentatifs d'au moins un paramètre de fonctionnement du véhicule, des moyens numériques de traitement de l'information aptes à calculer la pression à appliquer à l'actionneur pneumatique sélectionné par les premiers moyens de sélection.

9. Système de captage de courant selon la revendication 8, **caractérisé en ce que** les moyens numériques de traitement de l'information comprennent des ports série d'entrée/sortie informatique aptes à être connectés aux équipements informatiques du véhicule, et comprennent en outre un module informatique de monitoring apte à transmettre aux dits équipements informatiques du véhicule des informations sur le fonctionnement du système de captage de courant.

10. Véhicule ferroviaire **caractérisé en ce qu'**il est équipé d'un système de captage de courant selon les revendications 5 à 9.

## Claims

1. Selection device for railway locomotives which are provided with:
- a plurality of pantographs (1, 1'), each pantograph being associated with an actuator (11, 11') able to exert a force that can apply a current collector (9) provided on the pantograph against a catenary line (10); and
- a regulator (18, 19) of the force exerted by an actuator, this device able to operate according to a plurality of regulating modes,
- a power source (16);
said selection device being **characterised in that** it comprises:
- primary means of selecting (51) the actuator the force of which has to be regulated;
- secondary means of selecting (52) the regulating mode to be implemented on regulator (18, 19);
- means (21, 22, 23, 39, 40) for linking the power source with the actuator selected by the primary selector according to the regulating mode selected by the second means of selecting.

2. Selection device according to claim 1, **characterised in that** the primary means of selecting (51) include a control for selecting pantographactuator assembly to be used.

3. Selection device according to claim 1 or 2, **characterised in that** the second means (52) of selecting include means of detecting anomalies of the regulator (18, 19), means for reporting these anomalies as well as means for selecting the regulating mode to be used.

4. Selection device according to one of claims 1 to 3, **characterised in that** the means for linking include:
- members (39, 40) for the selective distribution of the power supply (16) to the regulator (18, 19) in such a way that the latter operates according to the regulating mode selected by the second means of selecting;
- members (22, 23) for the selective distribution of the power source regulated at the output of the regulator (18, 19) to the actuator (11, 11') selected by the primary selector.

5. Current pick-up system for railway locomotive, comprising:
- a plurality of pantographs (1, 1'), each pantograph being associated with an actuator (11, 11') able to exert a force that can apply a current collector (9) provided on the pantograph against a catenary line (10);
- regulator (18, 19) able to operate according to a plurality of regulating modes;
**characterised in that** it further comprises a selector according to one of claims 1 to 4.

6. Current pick-up system according to claim 5, **characterised in that** the regulator comprises:
- a primary regulator (18) able to regulate the force exerted by the actuator (11; 11') according to at least one operating parameter of the locomotive;
- a secondary regulator (19) able to maintain in the actuator (11; 11') one or several predetermined pressures,
and **in that** the second means of selecting include
- means of detecting anomalies of the primary regulator and/or of the secondary regulator,
- means for reporting these anomalies to the driver of the locomotive;
- means for controlling that are accessible to the driver or to the automatic system of the locomotive and able to selectively implement the primary regulator (18) or the secondary regulator (19).

7. Current pick-up system according to claim 6, **characterised in that**:
- the power source comprises a source of compressed air (16);
- the actuators (11, 11') associated with the pantographs (1, 1') are pneumatic actuators;
- the means of linking include:
- - solenoid valves (39, 40) associated with each of the regulators (18, 19) and arranged in order to selectively link one or the other of these regulators with the source of compressed air (16);
- - solenoid valves (22, 23) associated with each of the pneumatic actuators (11, 11') and arranged in order to selectively link one of these actuators with the output of the regulator.

8. Current pick-up system according to claim 7, **characterised in that** primary regulator (18) comprises an input receiving signals that represent at least one operating parameter of the locomotive, means for the digital processing of the information able to calculate the pressure to be applied to the pneumatic actuator selected by the primary selector.

9. Current pick-up system according to claim 8, **characterised in that** the means for the digital processing of the information include computer input/output serial ports able to be connected to the computer equipment of the locomotive, and further include a computerised monitoring module that can transmit to said computer equipment of the locomotive information on the operation of the current pick-up system.

10. Railway locomotive **characterised in that** it is provided with a current pick-up system according to claims 5 to 9.

## Patentansprüche

1. Auswahlvorrichtung für Gleisfahrzeuge, die ausgestattet sind mit:
- einer Vielzahl von Scherenstromabnehmern (1, 1'), wobei jeder Scherenstromabnehmer mit einem Stellglied (11, 11') verknüpft ist, das dazu geeignet ist, eine Kraft auszuüben, die in der Lage ist, einen Stromabnehmer (9), der auf dem Scherenstromabnehmer bereitgestellt wird, an eine Fahrleitung (10) anzulegen; und
- einer Vorrichtung (18, 19) zum Regulieren der von dem Stellglied ausgeübten Kraft, wobei diese Vorrichtung dazu geeignet ist, um in einer Vielzahl von Regulierungsmodi zu funktionieren;
- einer Leistungsquelle (16);
wobei die Auswahlvorrichtung **dadurch gekennzeichnet ist, dass** sie Folgendes umfasst:
- erste Mittel (51) zum Auswählen des Stellgliedes, dessen Kraft zu regulieren ist;
- zweite Mittel (52) zum Auswählen des Regulierungsmodus, der an der Regulierungsvorrichtung (18, 19) umzusetzen ist;
- Mittel (21, 22, 23, 39, 40), um die Leistungsquelle mit dem Stellglied in Verbindung zu setzen, das von den ersten Auswahlmitteln gemäß dem Regulierungsmodus ausgewählt wird, der von den zweiten Auswahlmitteln ausgewählt wird.

2. Auswahlvorrichtung nach Anspruch 1, **dadurch gekennzeichnet, dass** die ersten Auswahlmittel (51) einen Befehl zum Auswählen der zu verwendenden Anordnung aus Scherenstromabnehmer/Stellglied umfassen.

3. Auswahlvorrichtung nach Anspruch 1 oder 2, **dadurch gekennzeichnet, dass** die zweiten Auswahlmittel (52) Mittel zum Erkennen der Anomalien der Regulierungsvorrichtung (18, 19), Mittel zum Melden dieser Anomalien, sowie Mittel zum Auswählen des zu verwendenden Regulierungsmodus umfassen.

4. Auswahlvorrichtung nach einem der Ansprüche 1 bis 3, **dadurch gekennzeichnet, dass** die Mittel zum in Verbindungsetzen Folgendes umfassen:
- stellteile (39, 40) zum selektiven Verteilen der Leistungsversorgung (16) an die Regulierungsvorrichtung (18, 19), so dass diese nach dem Regulierungsmodus funktioniert, der von den zweiten Auswahlmitteln ausgewählt wird;
- stellteile (22, 23) zum selektiven Verteilen der ausgangsseitig regulierten Leistungsquelle der Regulierungsvorrichtung (18, 19) an das Stellglied (11, 11'), das von den ersten Auswahlmitteln ausgewählt wird.

5. System zur Stromabnahme für Gleisfahrzeuge, umfassend:
- eine Vielzahl von Scherenstromabnehmern (1, 1'), wobei jeder Scherenstromabnehmer mit einem Stellglied (11, 11') verknüpft ist, das dazu geeignet ist, eine Kraft auszuüben, die in der Lage ist, einen Stromabnehmer (9), der auf dem Scherenstromabnehmer bereitgestellt wird, an eine Fahrleitung (10) anzulegen;
- eine Regulierungsvorrichtung (18, 19), die dazu geeignet ist, in einer Vielzahl von Regulierungsmodi zu funktionieren;
**dadurch gekennzeichnet, dass** es ferner eine Auswahlvorrichtung nach einem der Ansprüche 1 bis 4 umfasst.

6. Stromabnahmesystem nach Anspruch 5, **dadurch gekennzeichnet, dass** die Regulierungsvorrichtung Folgendes umfasst:
- eine Hauptregulierungseinheit (18), die dazu geeignet ist, die Kraft, die von dem Stellglied (11; 11') ausgeübt wird, in Abhängigkeit von mindestens einem Betriebsparameter des Fahrzeugs zu regulieren;
- eine Nebenregulierungseinheit (19), die dazu geeignet ist, in dem Stellglied (11; 11') einen oder mehrere Vorherbestimmte Drücke aufrechtzuerhalten;
und dass die zweiten Auswahlmittel Folgendes umfassen:
- Mittel zum Erkennen der Anomalien der Hauptregulierungsvorrichtung und/oder der Nebenregulierungsvorrichtung;
- Mittel, um dem Fahrer des Fahrzeugs diese Anomalien zu melden;
- Steuermittel, die für den Fahrer oder die Automatik des Fahrzeugs zugänglich sind und dazu geeignet sind, selektiv die Hauptregulierungseinheit (18) oder die Nebenregulierungseinheit (19) einzusetzen.

7. Stromabnahmesystem nach Anspruch 6, **dadurch gekennzeichnet, dass:**
- die Leistungsquelle eine Druckluftquelle (16) umfasst;
- die Stellglieder (11, 11'), die mit den Scherenstromabnehmern (1, 1') verknüpft sind, Luftdruckstellglieder sind;
- die Mittel zum in Verbindungsetzen Folgendes umfassen:
- Magnetventile (39, 40), die mit jeder der Einheiten (18, 19) der Regulierungsvorrichtung verknüpft sind und angeordnet sind, um selektiv die eine oder andere dieser Einheiten mit der Druckluftquelle (16) in Verbindung zu setzen;
- Magnetventile (22, 23), die mit jedem der Druckluftstellglieder (11, 11') verknüpft sind und angeordnet sind, um selektiv eines dieser Stellglieder mit dem Ausgang der Regulierungsvorrichtung in Verbindung zu setzen.

8. Stromabnahmesystem nach Anspruch 7, **dadurch gekennzeichnet, dass** die Hauptregulierungseinheit (18) einen Eingang, der Signale empfängt, die mindestens einen Betriebsparameter des Fahrzeugs darstellen, digitale Mittel zur Datenverarbeitung, die dazu geeignet sind, um den Druck zu berechnen, der an das Druckluftstellglied anzulegen ist, das von den ersten Auswahlmitteln ausgewählt wird, umfasst.

9. Stromabnahmesystem nach Anspruch 8, **dadurch gekennzeichnet, dass** die digitalen Mittel zur Datenverarbeitung serielle Computer-Ein-/Ausgangsanschlüsse umfassen, die dazu geeignet sind, an die Computereinrichtungen des Fahrzeugs angeschlossen zu werden, und ferner ein Computer-Überwachungsmodul umfassen, das dazu geeignet ist, an die Computereinrichtungen des Fahrzeugs Informationen über den Betrieb des Stromabnahmesystems zu übertragen.

10. Gleisfahrzeug, **dadurch gekennzeichnet, dass** es mit einem Stromabnahmesystem nach den Ansprüchen 5 bis 9 ausgestattet ist.
